# EUROPEAN PATENT APPLICATION

(11) **EP 4 672 659 A1**
(43) Date of publication of application: **31.12.2025**
(21) Application number: 25182385.2
(22) Date of filing: 12.06.2025
(51) Int. Cl.: H04L 7/00, G06F 16/332, H04B 3/36, H04L 25/03

(54) **RE-TIMER-BASED GALVANICALLY ISOLATED DATA PATH**

(30) Priority: 24.06.2024 US 202418751608
(71) Applicant: Analog Devices International Unlimited Company, Limerick (IE)
(72) Inventor: LYNCH, Michael-T P., Co. Limerick (IE); MOANE, Brian, Co. Limerick (IE); O'LEARY, Finbarr Christopher, Co. Limerick (IE)
(74) Representative: Yang, Shu

(57) **Abstract**

Aspects of a re-timer-based isolator provide galvanic isolation between a first side of a system including a high voltage source and a second side of the system that may contact a person. An equalizer arranged with a physical layer on a first substrate is isolated from re-timer components arranged on a second substrate.

## Description

### BACKGROUND

This patent application claims the benefit of priority of US non-provisional application US 18/751,608entitled "RE-TIMER-BASED GALVANICALLY ISOLATED DATA PATH," filed on June 24, 2024.

### Field

The present application relates to an isolated repeater.

### Related Art

Galvanic isolation refers to energy flow between two circuit via a field rather than via electrical connections. Galvanic isolation provides signal isolation and power isolation and facilitates the flow of analog and digital signals, as well as power, between components at different ground potentials.

### BRIEF SUMMARY

Described herein are techniques for enhancing isolation in on-chip piezoelectric-based isolators. Several techniques are described that improve isolation in piezoelectric isolators. According to an aspect of the present disclosure, a piezoelectric isolator may include structures arranged to decrease the occurrence of pockets of high electric field and/or to increase the breakdown electric field in the path from the transmitter to the receiver. Further aspects of the present disclosure relate to techniques for increasing the efficiency of piezoelectric isolators while also limiting the formation of spurious signals. The inventors have developed techniques for promoting propagation of surface acoustic waves toward the receiver while limiting propagation in the opposite direction.

Some embodiments relate to an isolated repeater including an equalizer arranged on a first substrate to address signal loss in an input signal to provide an equalized signal. The isolated repeater also includes a clock and data recovery (CDR) subsystem arranged on a second substrate to recover timing information and data from the equalized signal. An isolator is arranged between the equalizer and the CDR subsystem to galvanically isolate the equalizer from the CDR subsystem.

In some embodiments, the equalizer is arranged on the first substrate with a first physical layer that couples to a first connector type.

In some embodiments, the CDR subsystem is part of a de-serializer to reduce jitter in the equalized signal to generate a parallel data stream.

In some embodiments, the isolated repeater also includes a serializer to obtain and drive a serial output based on the parallel data stream.

In some embodiments, the serializer is coupled to a second physical layer on the second substrate that couples to a second connector type.

In some embodiments, the isolated repeater also includes an eye-opening monitor (EOM) arranged on the second substrate between the isolator and the CDR subsystem.

In some embodiments, the EOM arranged on the second substrate provides feedback to the equalizer arranged on the first substrate to implement a decision feedback equalizer (DFE) to adaptively adjust equalizer settings, and wherein preferably the feedback is provided via the isolator or a second isolator.

Some embodiments relate to a system including a first connector type of a first substrate to couple to a first device, and an equalizer arranged with the first physical layer on the first substrate. The system also includes a clock and data recovery (CDR) subsystem arranged on a second substrate, and an isolator arranged between the equalizer and the CDR subsystem to galvanically isolate the equalizer and the CDR subsystem.

In some embodiments, the equalizer is arranged on the first substrate with a first physical layer that couples to a first connector type.

In some embodiments, the CDR subsystem is part of a de-serializer to reduce jitter in the equalized signal to generate a parallel data stream.

In some embodiments, the system also includes a serializer to obtain and drive a serial output based on the parallel data stream.

In some embodiments, the serializer is coupled to a second physical layer on the second substrate that couples to a second connector type of the second substrate, and the second connector type couples to a second device.

In some embodiments, the system also includes an eye-opening monitor (EOM) arranged on the second substrate between the isolator and the CDR subsystem.

In some embodiments, the EOM arranged on the second substrate to provide feedback to the equalizer arranged on the first substrate to implement a decision feedback equalizer (DFE) to adaptively adjust equalizer settings.

Some embodiments relate to a method of manufacturing an isolated repeater including obtaining a first substrate that includes an equalizer to address signal loss in an input signal and to provide an equalized signal and a first isolator portion. The method also includes obtaining a second substrate that includes a clock and data recovery (CDR) subsystem to recover timing information and data from the equalized signal and a second isolator portion, and coupling the first substrate with the second substrate such that the first isolator potion and the second isolator portion form an isolator that galvanically isolates the equalizer from the CDR.

In some embodiments, the obtaining the first substrate also includes the equalizer being arranged with a first physical layer that couples to a first connector type of the first substrate.

In some embodiments, the obtaining the second substrate also includes the CDR subsystem being part of a de-serializer to reduce jitter in the equalized signal and to generate a parallel data stream.

In some embodiments, the obtaining the second substrate includes the second substrate also including a serializer to obtain and drive a serial output based on the parallel data stream.

In some embodiments, the obtaining the second substrate includes the second substrate also including an eye-opening monitor (EOM) arranged between the isolator and the CDR subsystem.

In some embodiments, the coupling the first substrate with the second substrate includes coupling feedback from the EOM arranged on the second substrate to the equalizer arranged on the first substrate via the isolator formed by the first isolator portion and the second isolator portion or via a second isolator.

### BRIEF DESCRIPTION OF DRAWINGS

Various aspects and embodiments of the application will be described with reference to the following figures. It should be appreciated that the figures are not necessarily drawn to scale. Items appearing in multiple figures are indicated by the same reference number in all the figures in which they appear.
FIG. 1 is a block diagram of a system including a re-timer-based isolator according to some embodiments.
FIG. 2 is a block diagram detailing aspects of a de-serializer of the re-timer-based isolator according to some embodiments.
FIG. 3A is a top view of an exemplary isolator of the re-timer-based isolator according to some embodiments.
FIG. 3B is a side view of the exemplary isolator shown in FIG. 3A.
FIG. 4 illustrates an exemplary eye diagram that is controlled by using a re-timer-based isolator according to some embodiments.
FIG. 5 is a block diagram of a system including a re-timer-based isolator with feedback equalization according to some embodiments.

### DETAILED DESCRIPTION

Signal and power isolation may be desirable in a number of applications. For example, an endoscopic system includes a first side with the AC mains supply and processing components and a second side with the scope inserted in a patient. Power isolation between components of the first and second sides protects a patient from potential danger from the high voltage supply. In a number of applications, including medical and industrial applications, galvanic isolation includes signal isolation with amplification and power isolation between alternating current (AC) mains and associated components on one side of the isolator and other device components that are, for example, in contact with a person on the other side of the isolator. Signal isolation may address insertion loss, which refers to reduced signal strength during transit between an input and output.

A prior approach to isolation involves a high-voltage capacitor with re-drivers on each side for signal amplification. This approach provides direct current (DC) isolation and addresses attenuation introduced over the length of the cable. However, the re-driver approach has been found to increase, rather than decrease, jitter in data (e.g., images) transmitted across the isolator. For example, jitter in image data from the endoscope may be exacerbated when the data reaches the processing components on the high-voltage side. In applications, like the endoscopy example, that require ever-increasing data rates (e.g., rates approaching and exceeding 10 giga bits per second (Gbps)), the attenuation and jitter that must be addressed by the signal isolation are also increasing.

The inventors have recognized that an isolated repeater approach in the form of an isolated re-timer has advantages over the re-driver approach in that jitter is addressed, as well as cable loss. A re-timer incorporating a serializer de-serializer (SerDes) includes an equalizer and a clock-and-data recovery (CDR) subsystem that are generally part of the de-serializer and a driver that is generally part of the serializer. The re-timer regenerates a received signal and provides it for transmission as a new signal with a new loss budget.

According to one or more embodiments, the isolated repeater is arranged as an isolated de-serializer. In an isolated de-serializer, aspects of the de-serializer are isolated from each other. According to an exemplary embodiment, the equalizer, such as one that implements a continuous time linear equalization (CTLE), is separated from the CDR subsystem for inclusion with the physical (PHY) layer at the high-voltage side and is isolated from the CDR subsystem of the de-serializer. As a result of the architecture according to various embodiments detailed herein, the insertion loss mitigation (addressed by the equalizer) and jitter mitigation (addressed by the CDR subsystem) are separated by an isolator. The isolation may be accomplished by any known isolator core technology, an example of which is discussed further below.

According to additional embodiments, a decision feedback equalizer (DFE) may be implemented. Specifically, an eye-opening monitor (EOM) on the same side of the isolator as the CDR subsystem may provide feedback through the isolator to the equalizer on the AC mains side of the isolator. The DFE adaptively adjusts equalizer settings to minimize the accumulation of jitter in the de-serializer. The isolated repeater implemented as a re-timer that incorporates a SerDes facilitates compliance with protocols requiring bit error rate (BER) on the order of 10e-12 (or, more generally, less than 10e-10 or less than 10e-11).

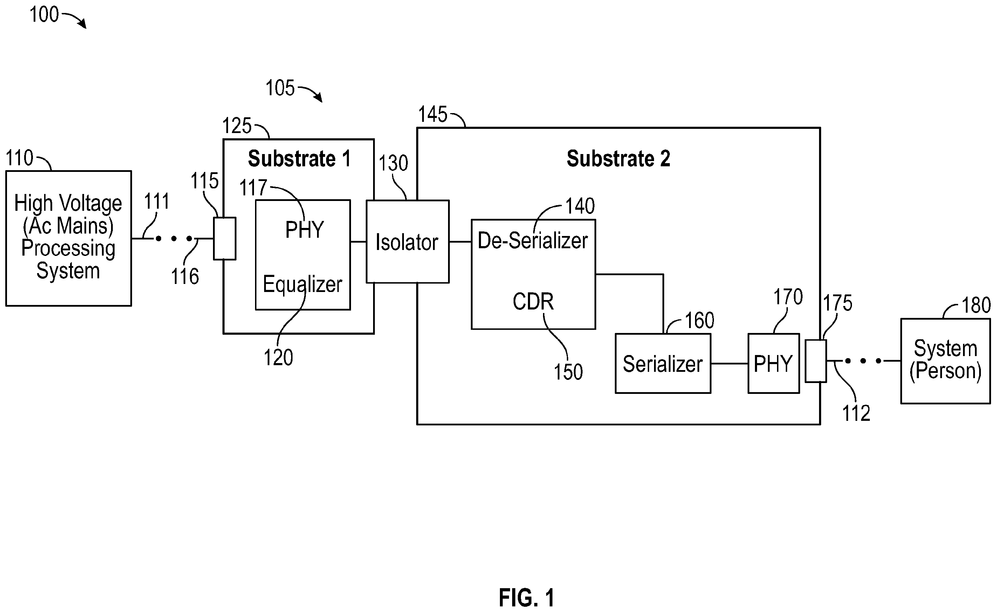

FIG. 1 is a block diagram of a system 100 including a re-timer-based isolator 105 according to some embodiments. The re-timer-based isolator 105 is an exemplary embodiment of an isolated repeater that receives a first side signal 111 and transmits a second side signal 112 based on the first side signal 111. In another channel, the re-timer-based isolator 105 may receive the second side signal 112 and transmit a first side signal 111 based on the second side signal 112. The first side signal 111 is from or to a first side 110 that includes the high voltage AC mains and processing system (e.g., endoscopic image processor and display). The second side signal 112 is to or form a second side 180 that includes a system (e.g., endoscope) that may be in contact with a person. For explanatory purposes, the first side signal 111 is regarded as an input to the re-timer-based isolator 105 and the second side signal 112 is regarded as an output from the re-timer-based isolator 105.

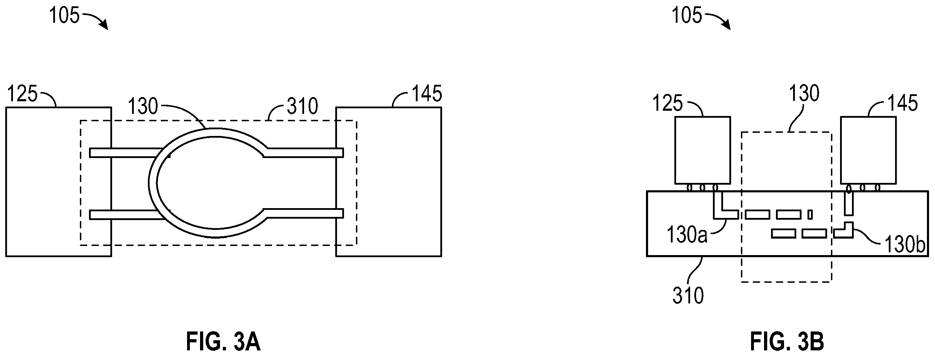

The re-timer-based isolator 105 may include a first substrate 125 that receives/transmits the first side signal 111 and a second substrate 145 that transmits/receives the second side signal 112. Substrate 125, 145 is used to represent die, printed circuit board (PCB), or other base for components of the re-timer-based isolator 105. The first substrate 125 and the second substrate 145 may be galvanically isolated and coupled through an isolator 130. As previously noted, the isolator 130 may be implemented as any known galvanic isolator and, more particularly, a high-speed isolator core technology appropriate for use with frequencies of 75 giga Hertz (GHz) or higher. An exemplary isolator is discussed with reference to FIG. 3A.

As previously noted, the equalizer 120 is isolated from the CDR 150 of the de-serializer 140 by the isolator 130. The equalizer 120 is included with the PHY 117 on the first substrate 125. The first substrate 125 also includes a connector 115 to couple to components on the first side 110. The equalizer 120 may be implemented with finite impulse response (FIR) filters and other known components to address the insertion loss resulting from the first side cable 116 that carries the first side signal 111.

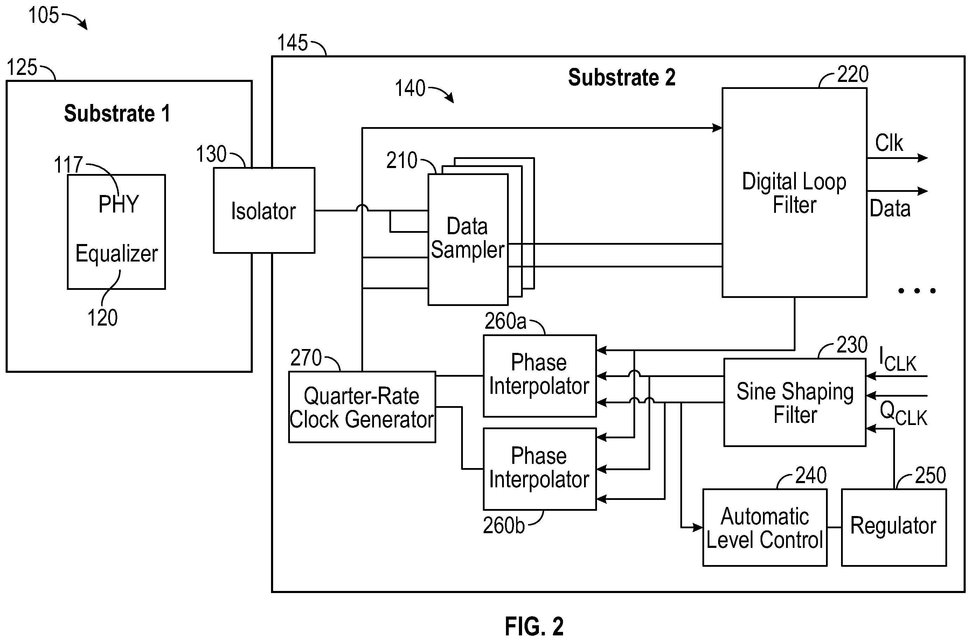

Assuming a signal path from the first side 110 to the second side 180 for explanatory purposes, the second substrate 145 includes the CDR 150 that recovers the clock of the first side signal 111 and facilitates re-timing to generate the second side signal 112. The CDR 150 and other components of the de-serializer 140 are further discussed with reference to FIG. 2. The de-serializer 140 performs a serial-to-parallel conversion on the incoming data. The de-serializer 140 and, in particular, the CDR 150 that facilitates re-timing, addresses jitter in the incoming signal. The output of the de-serializer 140 is provided to a serializer 160 as a new signal for transmission, rather than output as a processed signal as in the case of a re-driver. The second substrate 145 also includes a PHY 170 and a connector 175 to couple to components on the second side 180.

FIG. 2 details aspects of the isolated de-serializer 140 of the re-timer-based isolator 105 according to some embodiments. The input to the de-serializer 140 is a differential input signal. The output from the digital loop filter 220 is a multi-bit parallel output bus with a local clock, Clk, running at a fraction of the input data rate (e.g., 10 or 20 times lower than the serializer input bit sequence data rate). The in-phase and quadrature phase clocks (I_{CLK} and Q_{CLK}) are applied as input to a sine shaping filter 230. The input clocks, automatic level control 240, sine-shaping filters 230, and regulator 250 circuits produce sine-wave shaped clocks with a fixed amplitude to the phase interpolator 260a, 260b. The shaping facilitates good linearity for the phase interpolators 260a and 260b. The phase interpolators 260a, 260b mix the input clocks (I_{CLK} and Q_{CLK} shaped by the sine shaping filter 230a) to generate some number (x) of phase positions for the sample clocks. A quarter-rate clock generator 270 is used to divide down the I_{CLK} and Q_{CLK} clock rate, allowing the CDR 150 to operate at a fraction (e.g., one-half, one-quarter, one-eighth) of the applied clock frequency, depending on the input serialized data rate. A data sampler 210 samples the input data on the rising and falling edges of the interpolated clock. The data sampler 210 compares the edge and data samples to the input data and outputs a decision of early, late or no bit present to the digital loop filter 220. The digital loop filter 220 de-multiplexes the data samples and sends out an x-bit output (data) and local clock (Clk).

FIGs. 3A and 3B illustrate views of an isolator 130 of the re-timer-based isolator 105 according to an exemplary embodiment. The isolator illustrated in FIGs. 3A-3B is provided solely as one example. It should be noted, however, that the isolator 130 may be implemented in any other suitable way, including, for example, using polyimide-based isolators, optical isolators and acoustic isolators, just to name a few. FIG. 3A is a top view of an exemplary isolator 130. FIG. 3B is a side view of the exemplary isolator 130 illustrating that the first side component 130a, coupled to the first substrate 125, and the second isolator component 130b, coupled to the second substrate 145, are not physically connected. The isolator 130 may be formed on a PCB 310 that spans the first substrate 125 and second substrate 145. As previously noted, the isolator 130 provides galvanic isolation between the first substrate 125 and the second substrate 145. This results in power isolation between the first side 110 including the AC mains and the second side 180 that may include a person (e.g., patient undergoing endoscopy). It also results in signal isolation for signals (e.g., image signals from an endoscope) traversing the re-timer-based isolator 105 from the second side 180 to the first side 110, for example.

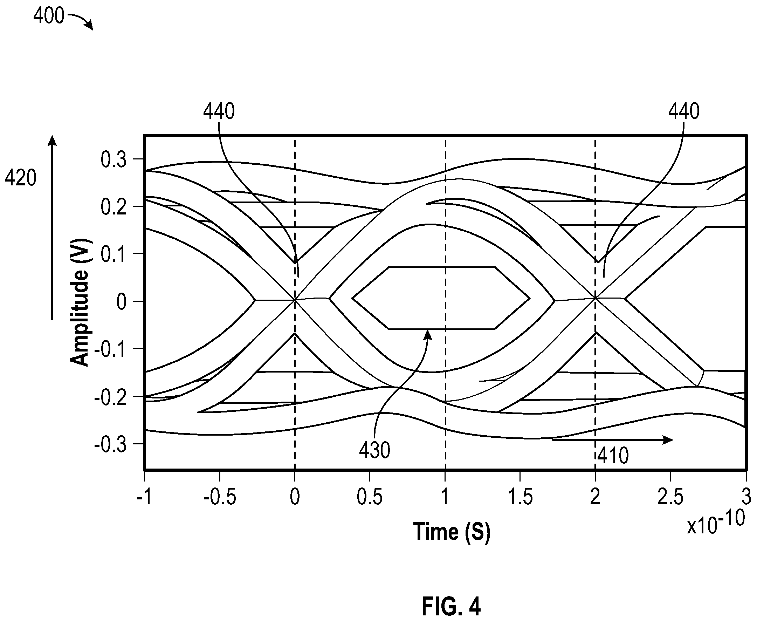

FIG. 4 illustrates an exemplary eye diagram 400 that is controlled by using a re-timer-based isolator 105 according to some embodiments. Generally, an eye diagram provides an assessment of the quality of a digital signal. An eye diagram is a graphical representation used in electronics and telecommunications to visualize the performance of a digital signal. It is named for its resemblance to the shape of an eye. The eye diagram is created by overlaying multiple cycles of a digital signal, typically a binary signal, over a single period. The open area in the middle of the diagram represents the time window during which the signal can be correctly sampled. A wider eye opening indicates less signal distortion and better performance. The points where the signal crosses the zero voltage level are referred to as zero crossings. These crossings are critical for timing and synchronization. Jitter is determined by the horizontal variation of the zero crossings.

The eye diagram 400 indicates time in picoseconds (ps) along a first axis 410 and amplitude in volts (v) along a second axis 420. The eye diagram 400 provides an indication of bit error rate (BER), which is a ratio of incorrectly received bits to total number of bits. An abbreviated assessment is based on an eye mask test that includes defining keep-out areas 430 in which signal should not be detected, rather than measuring all parametric aspects of the eye. Keeping signals out of the keep-out areas 430 may also be referred to as keeping the eye open. The eye diagram 400 is a graphical representation of the voltage and time limits of the signal. The eye mask applies to the jitter present in the signal after the application of the CDR jitter transfer function. In the eye diagram 400, time is measured from the crossing points 440 of the signals. The time is called the eye width, and the voltage is called the eye height. Violating the eye mask (i.e., keep-out area 430) in the time or voltage axis will result in the CDR 150 incorrectly interpreting the transmitted bit.

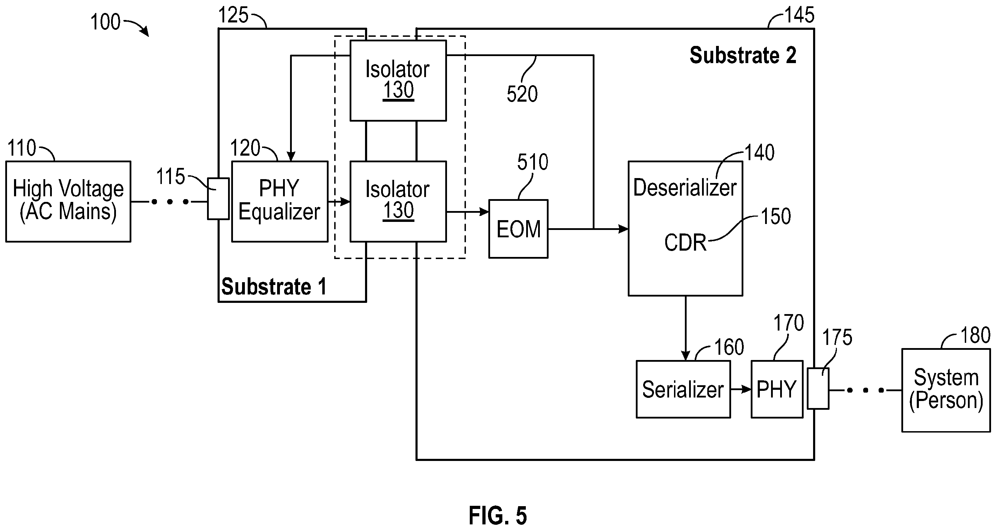

FIG. 5 is a block diagram of a system 100 including a re-timer-based isolator 105 with feedback equalization according to some embodiments. The aspects of the re-timer-based isolator 105 that are the same as the embodiment shown in FIG. 1 are not detailed. The assessment of the digital signal quality discussed with reference to FIG. 4 can indicate the effectiveness of the equalizer 120 of the re-timer-based isolator 105. According to the embodiment shown in FIG. 5, an eye open monitor (EOM) 510 is added to the second substrate 145 to assess the effectiveness of the equalizer 120 arranged on the first substrate 125. The EOM 510 facilitates implementing a dynamic feedback equalizer (DFE), because information from the EOM 510 is fed back to the equalizer 120 to adaptively adjust settings of the equalizer 120 and improve its performance. Because each channel of the isolator is unidirectional, a separate isolator 130 may be used for the feedback signal 520 from the EOM 510 on the second substrate 145 to the equalizer 120 on the first substrate 125. Alternately, different channels of the same isolator 130 may be used for transmission of a re-timed first side signal 111 as the second side signal 112 and for transmission of the feedback signal 520.

### Numbered aspects

By way of non-limiting example, some aspects of the disclosure are set out in the following numbered clauses.

Numbered Clause 1. An isolated repeater comprising:
an equalizer arranged on a first substrate and configured to address signal loss in an input signal to provide an equalized signal;
a clock and data recovery (CDR) subsystem arranged on a second substrate and configured to recover timing information and data from the equalized signal; and
an isolator arranged between the equalizer and the CDR subsystem and configured to galvanically isolate the equalizer from the CDR subsystem.

Numbered Clause 2. The isolated repeater according to Numbered Clause 1, wherein the equalizer is arranged on the first substrate with a first physical layer that couples to a first connector type.

Numbered Clause 3. The isolated repeater according to Numbered Clause 1 or 2, wherein the CDR subsystem is part of a de-serializer and is configured to reduce jitter in the equalized signal to generate a parallel data stream.

Numbered Clause 4. The isolated repeater according to Numbered Clause 3, further comprising a serializer configured to obtain and drive a serial output based on the parallel data stream.

Numbered Clause 5. The isolated repeater according to Numbered Clause 4, wherein the serializer is coupled to a second physical layer on the second substrate that couples to a second connector type.

Numbered Clause 6. The isolated repeater according to any preceding Numbered Clause, further comprising an eye-opening monitor (EOM) arranged on the second substrate between the isolator and the CDR subsystem.

Numbered Clause 7. The isolated repeater according to Numbered Clause 6, wherein the EOM arranged on the second substrate is configured to provide feedback to the equalizer arranged on the first substrate to implement a decision feedback equalizer (DFE) configured to adaptively adjust equalizer settings, and wherein preferably the feedback is provided via the isolator or a second isolator.

Numbered Clause 8. A system comprising:
a first connector type of a first substrate configured to couple to a first device;
an equalizer arranged on a first substrate to produce an equalized signal;
a clock and data recovery (CDR) subsystem arranged on a second substrate; and
an isolator arranged between the equalizer and the CDR subsystem and configured to galvanically isolate the equalizer and the CDR subsystem.

Numbered Clause 9. The system according to Numbered Clause 8, wherein the equalizer is arranged on the first substrate with a first physical layer that couples to a first connector type.

Numbered Clause 10. The system according to Numbered Clause 8 or 9, wherein the CDR subsystem is part of a de-serializer and is configured to reduce jitter in the equalized signal to generate a parallel data stream.

Numbered Clause 11. The system according to Numbered Clause 10, further comprising a serializer configured to obtain and drive a serial output based on the parallel data stream.

Numbered Clause 12. The system according to Numbered Clause 11, wherein the serializer is coupled to a second physical layer on the second substrate that couples to a second connector type of the second substrate, and the second connector type is configured to couple to a second device.

Numbered Clause 13. The system according to any of Numbered Clauses 8 to 12, further comprising an eye-opening monitor (EOM) arranged on the second substrate between the isolator and the CDR subsystem.

Numbered Clause 14. The system according to Numbered Clause 13, wherein the EOM arranged on the second substrate is configured to provide feedback to the equalizer arranged on the first substrate to implement a decision feedback equalizer (DFE) configured to adaptively adjust equalizer settings.

Numbered Clause 15. A method of manufacturing an isolated repeater, the method comprising:
obtaining a first substrate that includes an equalizer to address signal loss in an input signal and to provide an equalized signal and a first isolator portion;
obtaining a second substrate that includes a clock and data recovery (CDR) subsystem to recover timing information and data from the equalized signal and a second isolator portion; and
coupling the first substrate with the second substrate such that the first isolator portion and the second isolator portion form an isolator that galvanically isolates the equalizer from the CDR.

Numbered Clause 16. The method according to Numbered Clause 15, wherein the obtaining the first substrate also includes the equalizer being arranged with a first physical layer that couples to a first connector type of the first substrate.

Numbered Clause 17. The method according to Numbered Clause 15 or 16, wherein the obtaining the second substrate also includes the CDR subsystem being part of a de-serializer to reduce jitter in the equalized signal and to generate a parallel data stream.

Numbered Clause 18. The method according to Numbered Clause 17, wherein the obtaining the second substrate includes the second substrate also including a serializer to obtain and drive a serial output based on the parallel data stream.

Numbered Clause 19. The method according to any of Numbered Clauses 15 to 18, wherein the obtaining the second substrate includes the second substrate also including an eye-opening monitor (EOM) arranged between the isolator and the CDR subsystem.

Numbered Clause 20. The method according to Numbered Clause 19, wherein the coupling the first substrate with the second substrate includes coupling feedback from the EOM arranged on the second substrate to the equalizer arranged on the first substrate via the isolator formed by the first isolator portion and the second isolator portion or via a second isolator.

## Claims

1. An isolated repeater comprising:
an equalizer arranged on a first substrate and configured to address signal loss in an input signal to provide an equalized signal;
a clock and data recovery (CDR) subsystem arranged on a second substrate and configured to recover timing information and data from the equalized signal; and
an isolator arranged between the equalizer and the CDR subsystem and configured to galvanically isolate the equalizer from the CDR subsystem.

2. The isolated repeater according to claim 1, wherein the equalizer is arranged on the first substrate with a first physical layer that couples to a first connector type.

3. The isolated repeater according to claim 1 or 2, wherein the CDR subsystem is part of a de-serializer and is configured to reduce jitter in the equalized signal to generate a parallel data stream.

4. The isolated repeater according to claim 3, further comprising a serializer configured to obtain and drive a serial output based on the parallel data stream.

5. The isolated repeater according to claim 4, wherein the serializer is coupled to a second physical layer on the second substrate that couples to a second connector type.

6. The isolated repeater according to any preceding claim, further comprising an eye-opening monitor (EOM) arranged on the second substrate between the isolator and the CDR subsystem.

7. The isolated repeater according to claim 6, wherein the EOM arranged on the second substrate is configured to provide feedback to the equalizer arranged on the first substrate to implement a decision feedback equalizer (DFE) configured to adaptively adjust equalizer settings, and preferably wherein the feedback is provided via the isolator or a second isolator.

8. A system comprising:
a first connector type of a first substrate configured to couple to a first device; and
an isolator repeater of any of claims 1 to 7.

9. The system according to claim 8, wherein the second connector type is of the second substrate, and the second connector type is configured to couple to a second device.

10. A method of manufacturing an isolated repeater, the method comprising:
obtaining a first substrate that includes an equalizer to address signal loss in an input signal and to provide an equalized signal and a first isolator portion;
obtaining a second substrate that includes a clock and data recovery (CDR) subsystem to recover timing information and data from the equalized signal and a second isolator portion; and
coupling the first substrate with the second substrate such that the first isolator portion and the second isolator portion form an isolator that galvanically isolates the equalizer from the CDR.

11. The method according to claim 10, wherein the obtaining the first substrate also includes the equalizer being arranged with a first physical layer that couples to a first connector type of the first substrate.

12. The method according to claim 10 or 11, wherein the obtaining the second substrate also includes the CDR subsystem being part of a de-serializer to reduce jitter in the equalized signal and to generate a parallel data stream.

13. The method according to claim 12, wherein the obtaining the second substrate includes the second substrate also including a serializer to obtain and drive a serial output based on the parallel data stream.

14. The method according to any of claims 10 to 13, wherein the obtaining the second substrate includes the second substrate also including an eye-opening monitor (EOM) arranged between the isolator and the CDR subsystem.

15. The method according to claim 14, wherein the coupling the first substrate with the second substrate includes coupling feedback from the EOM arranged on the second substrate to the equalizer arranged on the first substrate via the isolator formed by the first isolator portion and the second isolator portion or via a second isolator.
